# EUROPÄISCHE PATENTSCHRIFT

(11) **EP 3 752 386 B1**
(45) Veröffentlichungstag und Bekanntmachung des Hinweises auf die Patenterteilung: **08.09.2021**
(21) Anmeldenummer: 18745815.3
(22) Anmeldetag: 06.07.2018
(51) Int. Cl.: B60L 53/10, B60L 53/16, B60L 53/18, B60L 53/68

(54) **LADEANORDNUNG FÜR EIN ELEKTROFAHRZEUG SOWIE VERFAHREN ZUM BETREIBEN DER LADEANORDNUNG**
CHARGING ARRANGEMENT FOR AN ELECTRIC VEHICLE AND METHOD FOR OPERATING THE CHARGING ARRANGEMENT
DISPOSITIF DE CHARGE POUR VÉHICULE ÉLECTRIQUE ET PROCÉDÉ DE FONCTIONNEMENT DU DISPOSITIF DE CHARGE

(30) Priorität: 07.07.2017 DE 202017104168 U
(43) Veröffentlichungstag der Anmeldung: 23.12.2020
(73) Patentinhaber: Scienlab Beteiligungsgesellschaft mbH, 44801 Bochum (DE)
(72) Erfinder: UHLENBROCK, Roger, 58456 Witten (DE); SCHUGT, Michael, 44629 Herne (DE); MUSS, Peter, 44879 Bochum (DE); DÖRLEMANN, Christoph, 45659 Recklinghausen (DE)
(74) Vertreter: Osterhoff, Utz
(86) Internationale Anmeldenummer: PCT/DE2018/100623
(87) Internationale Veröffentlichungsnummer: WO 2019/007466

(56) Entgegenhaltungen:
- EP-A1- 2 875 985
- WO-A1-2013/180324
- WO-A2-2011/151844
- JP-A- 2016 096 648
- US-A1- 2015 224 890
- US-A1- 2016 036 256

## Beschreibung

Die vorliegende Erfindung betrifft eine Ladeanordnung für ein Elektrofahrzeug gemäß den Merkmalen im Oberbegriff von Patentanspruch 1.

Die vorliegende Erfindung betrifft weiterhin ein Verfahren zum Betreiben der Ladeanordnung gemäß den Merkmalen im Oberbegriff von Patentanspruch 14.

Für das elektrische Fahren eines Elektro- oder Hybridfahrzeuges ist es notwendig, dass die Batterie, nachfolgend auch Traktionsbatterie genannt, des Fahrzeuges über eine externe Energiequelle geladen wird. Dabei wird die Zuführung der Energie über ein Stecksystem mit einem Ladekabel realisiert, mit dem die externe Energiequelle mit dem Fahrzeug verbunden wird und der Ladevorgang stattfinden kann.

Damit ein Standard erreicht wird, wird der Ladevorgang in verschiedenen Normungen (z. B. IEC 61851, DIN SPEC 70121 und ISO 15118) definiert. Dabei wird grundsätzlich zwischen einer "AC-Ladung" und einer "DC-Ladung" unterschieden. Bei der AC-Ladung wird das Elektrofahrzeug mit dem Ladekabel direkt an einer Haushaltssteckdose angeschlossen (ein- oder dreiphasig). Die übertragbaren Leistungen sind hierbei auf 22 kW begrenzt.

Um höhere Ladeleistungen zu realisieren, wird die sogenannte DC-Ladetechnologie eingesetzt. Bei dieser wird durch ein externes Ladegerät eine DC-Spannung erzeugt, die mit dem Ladekabel an das Fahrzeug und innerhalb direkt an die Batterie angeschlossen wird. Heutzutage können damit Ladeleistungen bis 50 kW erreicht werden.

Betrachtet man die Ziele der Automobilindustrie, so werden die Reichweiten eines Elektrofahrzeuges von momentan 150 km auf 500 km oder mehr ansteigen. Zusätzlich wird gefordert, dass die Ladezeit von bisher mehreren Stunden auf einige Minuten reduziert werden soll. Dieses ist nur möglich, indem der Batterie-Ladestrom auf mehrere Hundert Ampere (anstatt 50 A Stand heute) ansteigt. Problematisch sind dabei die Ladekabel zwischen Ladesäule und Elektrofahrzeug. Gemäß der Normung DIN VDE 0298 müssen die Kabelquerschnitte entsprechend dem maximalen Strom ausgelegt werden.

Für die Datenkommunikation zwischen Elektrofahrzeug und Ladesäule werden unterschiedliche Verfahren verwendet (PWM, PLC). Die Kommunikation läuft aber immer kabelgebunden über zusätzliche im Ladekabel befindliche isolierte Kommunikationsleitungen.

Diese zusätzlichen Kommunikationsleitungen erhöhen natürlich auch das Gewicht und die Herstellungskosten eines Ladekabels.

Zur Lösung des Gewichtsproblems werden Ladekabel mit integrierter Wasserkühlung vorgeschlagen. Dadurch können zwar die Querschnitte und somit das Kupfergewicht eingespart werden, jedoch ist die Wasserkühlung sehr aufwendig und ebenfalls teuer in Herstellung und Unterhalt.

Außerdem ist an den Ladesäulenstandpunkten häufig kein Wasseranschluss vorhanden, so dass diese entweder extra gelegt oder aber in der Ladesäule ein Wasserkühlsystem mit einem Wärmetauscher installiert werden muss. Beide Lösungen erhöhen die Anschaffungskosten erheblich. Zusätzlich wird durch die Wasserkühlung die Wartung der Säule und des Ladekabels sehr aufwendig und kostspielig.

Durch die Reduzierung des Kabelquerschnitts wird der elektrische Widerstand des Ladekabels größer, was die Verlustleistung erhöht. Diese Verluste verschlechtern den Wirkungsgrad und erhöhen die Kosten für die elektrische Ladung, die der Anwender und/oder der Betreiber bezahlen muss.

Aus der DE 10 2014 004 790 A1 ist beispielsweise eine Ladeanordnung bekannt, bei der innerhalb eines Kraftfahrzeuges zwei Energiespeicherelemente in Serie geschaltet werden, um die mögliche Ladespannung zu erhöhen.

Aus der Entgegenhaltung EP 2 875 985 A1 ist eine Ladeanordnung für Elektrofahrzeuge bekannt. Hier wird ein Abwärtswandler 27 einem Ladepunkt vorgeschaltet, so dass an dem Ladepunkt eine Ladespannung für ein Elektrofahrzeug bereitgestellt ist.

Eine ähnliche Anordnung ist aus der WO2011/151844 A2 bekannt.

Aufgabe der vorliegenden Erfindung ist es, eine Möglichkeit bereit zu stellen, unter Einhaltung von bereits entwickelten Normen die Ladeleistung für Elektrofahrzeuge zu steigern, gleichzeitig das notwendige Handling, um den Ladevorgang zu beginnen bzw. zu beenden, zu vereinfachen.

Die Aufgabe wird erfindungsgemäß bei einer Ladeanordnung mit den Merkmalen im Anspruch 1 gelöst.

Vorteilhafte Ausführungsvarianten sind Gegenstand der abhängigen Ansprüche.

Ein verfahrenstechnischer Teil der Aufgabe wird mit den Merkmalen im Anspruch 14 gelöst.

Die Ladeanordnung für ein Elektrofahrzeug mit einer Traktionsbatterie weist eine Spannungsversorgungsstation, angeschlossen an ein Spannungsnetz, auf sowie ein Spannungsversorgungskabel mit Ladestecker, wobei zur Durchführung des Ladevorganges der Ladestecker mit dem Elektrofahrzeug verbunden ist. Erfindungsgemäß zeichnet sich die Ladeanordnung dadurch aus, dass in dem Ladestecker ein Spannungskonverter zur Konvertierung der Versorgungsspannung in eine relativ dazu geringere Ladespannung angeordnet ist.

Eine Spannungsversorgungsstation wird umgangssprachlich auch als Ladesäule bezeichnet. Diese ist an ein Spannungsnetz angeschlossen, welches entweder eine zentrale oder dezentrale Vorverteilung aufweist. An dieser Spannungsversorgungsstation liegt nunmehr eine Versorgungsspannung an. Erfindungsgemäß liegt diese Versorgungsspannung auch an dem Ladestecker selbst an. Das Spannungsversorgungskabel ist mit der Spannungsversorgungsstation verbunden. Die Versorgungsspannung ist deutlich höher als die mögliche Ladespannung, die das jeweilige Elektrofahrzeug aufnehmen kann. Gemäß aktuellem Stand der Technik sind Elektrofahrzeuge für Ladespannungen von ca. 400 V bzw. bis zu 500 V und in Ausnahmefällen von bis zu 800 V oder 850 V ausgelegt. Die Versorgungsspannung weist erfindungsgemäß jedoch einen höheren Voltbereich auf, von mehr als 900 V und bevorzugt mehr als 1.000 V.

Damit nunmehr die Versorgungsspannung an das Elektrofahrzeug übertragen werden kann, ist ein Spannungskonverter in bzw. an dem Ladestecker angeordnet. Bei insbesondere normierten Ladesteckern können solche Spannungskonverter an den Ladesteckern nachgerüstet werden. Neu zu produzierende Ladestecker können den Spannungskonverter bereits integriert haben. Der Spannungskonverter weist die Funktionen eines Spannungswandlers und/oder Spannungstransformators auf und kann so bezeichnet werden. Eine höhere Versorgungsspannung wird auf eine relativ dazu geringere Ladespannung konvertiert, insbesondere umgewandelt bzw. transformiert.

Der Spannungskonverter kann bei einem DC/DC-Ladevorgang ein Tiefsetzsteller (step-down-converter) sein.

Die erfindungsgemäße Ladeanordnung bietet somit verschiedene Vorteile. Zum einen kann eine aufwendige Regelungstechnik für den Ladevorgang in der Spannungsversorgungsstation selbst entfallen. Die Steuerungs- bzw. Regelungstechnik für den Ladevorgang selbst kann bereits als Hard- und Software in dem Spannungskonverter integriert sein, so dass das Elektrofahrzeug mit dem Spannungskonverter kommuniziert und dieser aus der Versorgungsspannung die notwendige Ladespannung bereitstellt. Gleichzeitig ist es möglich, eine höhere Ladeleistung bis zum Ladestecker zu übertragen. Ein Spannungsversorgungskabel, welches üblicherweise eine Länge von 1 m bis 5 m, insbesondere 1 m bis 3 m aufweist, kann in seinem Leitungsquerschnitt deutlich reduziert werden bei gleicher oder gesteigerter Ladeleistung.

Im Falle der Regelungstechnik für den Ladevorgang in dem Ladestecker selbst und/oder eines zusätzlichen drahtlos Kommunikationsmoduls in dem Ladestecker kann auf eine Datenleitung im Spannungsversorgungskabel verzichtet werden. Die Herstellungskosten für ein entsprechendes Spannungsversorgungskabel können daher aufgrund hoher Kupferpreise sowie geringerer Querschnitte reduziert werden. Das Handling eines erfindungsgemäßen Spannungsversorgungskabels kann für den einzelnen Anwender deutlich vereinfacht werden, da es ein geringeres Gewicht aufweist gegenüber aus dem Stand der Technik bekannten Ladekabeln. Notwendig im Sinne dieser Erfindung ist jedoch immer ein physischer Kontakt von Ladestecker und Elektrofahrzeug.

Bei dem Elektrofahrzeug selbst kann es sich um Hybridfahrzeuge, insbesondere Steckerhybridfahrzeuge sowie reine Elektrofahrzeug handeln. Es können sowohl Kraftfahrzeuge als auch Nutzfahrzeuge mit der erfindungsgemäßen Ladeanordnung geladen werden. Auch denkbar ist, die Ladeanordnung für Flurfahrzeuge sowie Gabelstapler. Theoretisch wäre es auch denkbar, mit der erfindungsgemäßen Ladeanordnung Luftfahrzeuge und Wasserfahrzeuge zu versorgen. Das Handling der Ladeanordnung - Steckvorgang des Ladesteckers - ist deutlich vereinfacht. Die Ladeleistung kann ebenfalls deutlich gesteigert werden, so dass die Ladezeit verkürzt werden kann, gleichzeitig jedoch aktuell geltende Normen und Sicherheitsvorschriften eingehalten sind.

Es findet bevorzugt immer bei dem Ladevorgang eine Kommunikation mit dem Kraftfahrzeug statt.

Mit der erfindungsgemäßen Ladeanordnung werden DC-Ladevorgänge durchgeführt. Dies bedeutet, dass eine DC-Versorgungsspannung durch den Spannungskonverter auf eine relativ dazu geringere DC-Ladespannung konvertiert wird.

In dem Spannungsversorgungskabel selbst sind mindestens zwei, bevorzugt drei elektrische Leiter angeordnet. Es können auch vier oder fünf elektrische Leiter in dem Spannungsversorgungskabel angeordnet sein. Weiterhin kann optional mindestens eine Kommunikationsleitung in dem Spannungsversorgungskabel angeordnet sein. Durch den erfindungsgemäß in dem Ladestecker angeordneten Spannungskonverter ist es möglich, die Leitungsquerschnitte der elektrischen Leiter zu reduzieren, bei mindestens gleichbleibender und/oder erhöhter am Ladestecker zur Verfügung gestellter Ladeleistung.

Ein jeder elektrischer Leiter kann dabei im Rahmen der Erfindung bevorzugt im Querschnitt einteilig ausgebildet sein. Einteilig bedeutet nicht massiv bzw. einstückig. Ein eindeutiger Leiter kann aus einer Vielzahl von Adern gebildet sein, welche zu einem Bündel zusammengefasst sind. Es ist jedoch auch möglich mindestens einen elektrischen Leiter durch mindestens zwei Leitungsstränge auszubilden. Dies bedeutet im Sinne der Erfindung, dass die zwei Leitungsstränge separat voneinander in dem Spannungsversorgungskabel angeordnet sind. Bevorzugt kann ein elektrischer Leiter durch mehr als drei Leitungsstränge, insbesondere sechs Leitungsstränge, ausgebildet sein. Es können jedoch auch mehr als sechs Leitungsstränge für einen elektrischen Leiter im Spannungsversorgungskabel angeordnet sein. Eine weitere vorteilhafte Ausführungsvariante der Erfindung sieht vor, dass alle elektrischen Leiter jeweils durch mindestens zwei voneinander separate Leitungsstränge in dem Spannungsversorgungskabel ausgebildet sind. Dies bietet den erfindungsgemäßen Vorteil, dass im Falle einer Beschädigung, insbesondere eines Kabelbruches eines Leitungsstranges, trotz der hohen zu übertragenen Ladeleistung, ein jedoch nur geringer Kurzschlussstrom abgesichert werden muss. Insbesondere werden somit Schäden durch Überspannung gerade an die Ladeanordnung bedienenden Personen vermieden. Ein jeder einzelner Leitungsstrang kann somit für einen geringeren Kurzschlussstrom abgesichert werden, als ein demgegenüber größerer einteiliger elektrischer Leiter.

Weiterhin besonders bevorzugt können die mindestens zwei Leitungsstränge bevorzugt die mehreren Leitungsstränge bezogen auf den Querschnitt des Spannungsversorgungskabels regelmäßig oder unregelmäßig verteilt angeordnet sein. Dies bedeutet, wiederum bezogen auf die Verteilung im Querschnitt, dass entweder alle Leitungsstränge eines elektrischen Leiters als zwar separate Leistungsstränge jedoch örtlich zusammen angeordnet sind. Es können jedoch auch alle Leitungsstränge von allen elektrischen Leitern unregelmäßig oder auch regelmäßig verteilt zueinander angeordnet sein. Dies bedeutet beispielsweise in einer Abfolge, dass ein Leitungsstrang plus, gefolgt ist von einem Leitungsstrang minus, gefolgt von einem Leitungsstrang PE Schutz, gefolgt ist von einem Leitungsstrang plus, wiederum gefolgt von einem Leitungsstrang minus usw. angeordnet ist. Die Leitungsstränge können jedoch auch wie gesagt unregelmäßig verteilt in dem Querschnitt angeordnet sein. Die Aufteilung der Leiter auf einzelne Leitungsstränge und wiederum eine regelmäßige oder unregelmäßige Verteilung der Leitungsstränge der einzelnen Leiter untereinander sorgen für eine geringere Induktivität des Spannungsversorgungskabels. Somit wird ein geringerer Spannungsabfall der über das Spannungsversorgungskabel übertragenen Spannung erreicht.

Eine weitere vorteilhafte Ausgestaltungsvariante sieht vor, dass das Spannungsversorgungskabel von einer Schirmung umgeben ist. Die Schirmung kann zum einen die durch das Spannungsversorgungskabel erzeugten Felder abschirmen. Zum anderen kann jedoch auch die Schirmung dazu genutzt werden, dass bei einem Kabelbruch oder ähnlichem ein Kurzschluss erzeugt wird und somit die Ladeanordnung aus Sicherheitsgründen abgeschaltet wird.

Der Spannungskonverter benötigt zu seinem Betrieb ebenfalls elektrische Energie. Eine Spannungsversorgung für den Spannungskonverter kann über das Spannungsversorgungskabel selbst erfolgen und somit von der Versorgungsspannung abgegriffen werden. Es ist jedoch auch möglich, den Spannungskonverter durch einen diesem zugeordneten bzw. integrierten Energiespeicher selbst mit elektrischer Energie zu versorgen. Hierzu kann beispielsweise ein Akkumulator eingesetzt sein, der insbesondere bei Nichtgebrauch der Ladeanordnung selbst aufgeladen wird.

Im Rahmen der Erfindung ist es somit möglich, über das Spannungsversorgungskabel selbst eine Versorgungsspannung von mehr als 900 V, insbesondere mehr als 1.000 V, bevorzugt mehr als 1.200 V, besonders bevorzugt mehr als 1.300 V und ganz besonders bevorzugt mehr als 1.400 V zu übertragen. Eine realistische Obergrenze zur maximal zu übertragenen Versorgungsspannung sollte bei maximal 10.000 V, besonders bevorzugt bei ca. 5.000 V liegen. Im Rahmen der Erfindung ist es vorstellbar, dass insbesondere Versorgungsspannungen von 1.000 V bis 1.600 V, insbesondere 1.300 V bis 1.550 V und besonders bevorzugt 1.400 V bis 1.500 V über das Spannungsversorgungskabel übertragen werden bzw. am Ladestecker auf der Seite des Spannungsversorgungskabels bereit zu stellen.

Weiterhin ist es im Rahmen der Erfindung vorstellbar, Versorgungsspannungen von 1.800 V bis 2.500 V, insbesondere 1.900 V bis 2.400 V und besonders bevorzugt von ca. 2.000 V bis 2.200 V bereitzustellen. Diese Versorgungsspannungen werden in dem Spannungskonverter dann auf eine relativ dazu geringere Ladespannung konvertiert.

Die Ladespannung wird für eine Hochvoltbatterie (Traktionsbatterie) bereitgestellt. Dies bedeutet, die Ladespannung liegt zwischen 400 V und 850 V, bevorzugt bei 400 V oder 800 V. Abweichungen, die von einem Elektrofahrzeug zu Beginn oder während eines Ladevorganges gefordert wären, sind in zuvor genannten Angaben mit einzubeziehen.

Es liegt ein Verhältnis von Ladespannung zu Versorgungsspannung kleiner 0,9 vor. Dies bedeutet, dass die Ladespannung kleiner als 0,9 mal der Versorgungsspannung ist. Besonders bevorzugt ist die Ladespannung kleiner 0,85, insbesondere kleiner 0,8, besonders bevorzugt kleiner 0,75, besonders bevorzugt kleiner 0,7 und ganz besonders bevorzugt kleiner 0,6 mal der Versorgungsspannung. Das Verhältnis sollte jedoch größer 0,1 sein.

Damit ist es möglich, bei heutigen Normen und Sicherheitsvorschriften sowie verfügbaren Ladetechnologien auf Seiten der Elektrofahrzeuge, die Ladezeiten zu verkürzen bei mindestens gleichbleibender, insbesondere gesteigerter Ladeleistung. Es müssen jedoch keinerlei Modifikationen an den Elektrofahrzeugen selbst, d. h. am Lademanagement seitens des Elektrofahrzeuges und/oder an den Energiespeichern seitens des Elektrofahrzeuges, vorgenommen werden.

Für das Spannungsversorgungskabel kann somit der stromleitende Querschnitt eines jeden elektrischen Leiters kleiner 100 mm², insbesondere kleiner 80 mm², bevorzugt kleiner 70 mm² und insbesondere kleiner 55 mm², bevorzugt zwischen 20 mm² und 55 mm² gewählt werden. Auch hier sollten mindestens 10 mm² als stromleitende Querschnittsfläche vorhanden sein. Es können somit standardisierte Kabelquerschnitte für die Spannungsversorgungskabel genutzt werden und insbesondere aus dem Stand der Technik bekannte Kabelquerschnitte von Spannungsversorgungskabeln reduziert werden. Alternativ müssen die Kabelquerschnitte nicht erhöht werden, gleichsam wird jedoch die Ladeleistung deutlich gesteigert. Die geltenden gesetzlichen Vorschriften sowie Sicherheitsvorschriften werden dabei eingehalten.

Nachfolgend eingeblendete Tabelle zeigt bei vorgegebenen Ladeleistungen die Möglichkeit der Querschnittsreduktion am Beispiel einer über das Spannungsversorgungskabel übertragenen Versorgungsspannung von 1.500 V. Gemäß Spalte 3 ist jeweils eine Ladespannung von 500 V oder 850 V angegeben. Dies entspricht der Ladespannung die in dem Ladestecker nach dem Spannungskonverter an das Kraftfahrzeug angelegt wird. Für die erste Zeile bedeutet dies bei einer Ladeleistung von 50 kW und einer Ladespannung von 500 V, dass ein Ladestrom von 100 A übertragen werden muss. Hierzu müsste die stromleitende Querschnittsfläche eines jeden Leiters mindestens 25 mm² groß sein. Mit einer Versorgungsspannung von 1.500 V wäre es somit theoretisch möglich den stromleitenden Querschnitt auf 4 mm² zu reduzieren. Wird die Ladespannung gemäß 2. Zeile bei einer Ladeleistung von 50 kW auf 850 V angehoben, so müssten immerhin noch fast 60 A über das Spannungsversorgungskabel übertragen werden. Diese bedürften nach dem Stand der Technik einen stromleitenden Querschnitt eines jeden Leiters von 10 mm². Auch hier wäre theoretisch eine Reduzierung bei Erhöhung der Versorgungsspannung auf 1.500 V des stromleitenden Querschnitts eines jeden einzelnen Leiters auf 4 mm² möglich.

Der erfindungsgemäße Unterschied wird jedoch insbesondere bei höherer Ladeleistung erkennbar. Bei 150 kW Ladeleistung und einer Ladespannung von 500 V müssten 300 A Ladestrom übertragen werden. Diese 300 A bedürfen nach Sicherheitsvorschrift mindestens einen stromleitenden Querschnitt von 120 mm² je Leiter. Wird nunmehr die Versorgungsspannung auf 1.500 V angehoben, so ist es möglich bei gleichem Ladestrom den stromleitenden Querschnitt eines jeden Leiters auf 25 mm² zu reduzieren, da bei gleichbleibender Ladeleistung von 150 kW nur noch 100 A durch das Spannungsversorgungskabel geleitet werden müssen. Es ergibt sich somit eine Reduktion des stromleitenden Querschnitts eines jeden Leiters um den Faktor 4 bis 5. Das Spannungsversorgungskabel kann somit bei gleichbleibender Ladeleistung um mindestens das 4-fache Gewicht leichter ausfallen, was das Handling und damit die Akzeptanz des Benutzers deutlich vereinfacht, bei wie gesagt gleichbleibender Ladeleistung unter Einhaltung der aktuellen Sicherheitsvorschriften:

| **Leistung** | **Ladestrom** | **Ladespannung** | **A mm² Standard** | **A mm² U_v 1.500** V |
|---|---|---|---|---|
| 50 kW | 100 A | 500 V | 25 | 4 |
| | 59 A | 850V | 10 | 4 |
| 150kW | 300 A | 500 V | 120 | 25 |
| | 177 A | 850 V | 50 | 25 |
| 350 kW | 700 A | 500 V | 3 x 120 | 70 |
| | 412 A | 850 V | 2 x 120 | 70 |

Die Ladefunktion selbst wird dann erfindungsgemäß über den bzw. in dem Ladestecker geregelt. Die Spannungsversorgungsstation selbst stellt die Versorgungsspannung zur Verfügung. Der Ladestecker und insbesondere eine Regelungseinrichtung in dem Ladestecker kommuniziert dann mit dem Elektrofahrzeug bzw. dem Lademanagement des Elektrofahrzeuges. Hierzu können insbesondere bekannte kabelgebundene Standards, wie beispielsweise PLC- sowie PWM-Kommunikation, genutzt werden. Die zur Verfügung gestellte Versorgungsspannung wird von dem Spannungskonverter in dem Ladestecker dann auf die benötigte bzw. vorgegebene Ladespannung konvertiert. Es kann somit auf der Seite des Ladesteckers des Elektrofahrzeuges direkt an dem Elektrofahrzeug die benötigte bzw. vorgegebene Ladespannung anliegen und der daraus resultierende Ladestrom an das Elektrofahrzeug übertragen werden. Insbesondere bietet dies den Vorteil, dass eine weitere Kommunikationsleitung in dem Spannungsversorgungskabel entfallen kann.

Optional kann weiterhin in oder an dem Ladestecker selbst oder zwischen Ladestecker und Spannungsversorgungsstation ein drahtlos Kommunikationsmodul angeordnet werden. Als drahtlos Kommunikationsstandard können beispielsweise Bluetooth oder Wlan genutzt werden. Auch kann als drahtlos Kommunikationsstandard ein Mobilnetzstandard, beispielsweise GSM, genutzt werden, so dass entsprechende Daten übertragen werden. Zum einen können dies Daten sein, welche übertragen werden von dem Kommunikationsmodul an die Spannungsversorgungsstation. Zum anderen können dies auch Daten sein, die zu einem Server übertragen werden. Diese Daten können beispielsweise Daten sein, die der Betreiber solcher Spannungsversorgungsstationen benötigt. Es können jedoch auch Daten sein, die an den Automobilhersteller hinsichtlich Ladezuständen sowie Ladeverbräuchen der Elektrofahrzeuge übertragen werden. Ein weiteres Anwendungsbeispiel ist die Weitergabe von Daten an den Fahrer bzw. Halter des Elektrofahrzeuges. Es können beispielsweise Informationen über den Ladevorgang, über den Preis des Ladevorganges oder auch den Ladezustand der Traktionsbatterie weitergegeben werden. Diese können dann in einer Weiterbildung auf einer entsprechenden Softwareapplikation (App) eines mobilen Endgeräts, beispielsweise einem Smartphone, dargestellt werden. Auch kann hier ein Rechnungswesen eingeführt werden, das der für den Ladevorgang benötigte Strompreis und die Menge erfasst werden und dann über das Kommunikationsmodul abgerechnet werden, beispielsweise auch unter Zwischenschaltung eines mobilen Endgerätes.

Auch wäre es vorstellbar, dass das drahtlos Kommunikationsmodul den Spannungskonverter selbst regelt. Eine zusätzliche Regelungshardware zum Betreiben des Spannungskonverters würde in diesem Fall entfallen und durch das Kommunikationsmodul übernommen werden.

Weiterhin kann beispielsweise das Kommunikationsmodul die Temperatur im Ladestecker selbst und/oder an den Anschlussklemmen bzw. Steckkontakten des Ladesteckers überwachen. In Abhängigkeit der auftretenden Temperaturen kann dann wiederum die Ladespannung geregelt werden, so dass hohe Temperaturen oder ein Überhitzen, insbesondere an den Anschlussklemmen, vermieden wird.

In einer weiteren besonderen Ausgestaltungsvariante der vorliegenden Erfindung ist eine elektronische Anzeige auf der Steckeroberfläche vorgesehen. Diese Anzeige kann insbesondere ein Display, beispielsweise ein Kristalldisplay sein, auch LCD-Display oder OLED-Display genannt. Es können auch OLED-Displays oder andere Anzeigedisplays verwendet werden. Auf dieser Anzeige können dann Informationen über den Ladezustand, den Ladevorgang dargestellt werden, so dass ein Fahrzeugführer diese Informationen anhand des Ladesteckers während des Ladevorganges ablesen kann. Beispielsweise kann angezeigt werden, dass die Traktionsbatterie nunmehr halbvoll geladen sind, was den Fahrer interessieren würde, und er den Ladevorgang an dieser Stelle selbst abbricht, um weiterzufahren. Auch kann beispielsweise der bisherige und zu erwartende Preis für den Ladevorgang angezeigt werden, so dass der Fahrer des Elektrofahrzeuges darüber informiert wird.

Für das drahtlos Kommunikationsmodul selbst wäre wiederum eine eigene Energieversorgung notwendig. Diese kann entweder über die Versorgungsspannung erfolgen. Auch kann das drahtlos Kommunikationsmodul sowie die Anzeige über einen Energiespeicher im Stecker gespeist werden. Bevorzugt ist dies der gleiche Energiespeicher, welcher auch den Spannungskonverter versorgt. Der Energiespeicher selbst kann beispielsweise bei Nichtgebrauch der Ladeanordnung selbst aufgeladen werden.

Die gesamte Regelung der Ladefunktion wird somit im Ladestecker selbst vorgenommen. Die Spannungsversorgungsstation dient somit nur zur Bereitstellung der Versorgungsspannung. Es können damit die Herstellungs-, aber auch die Unterhaltskosten zum Betreiben einer erfindungsgemäßen Ladeanordnung deutlich reduziert werden, bei gesteigerter Ladeleistung und verbessertem Handling der Spannungsversorgungsstation.

Es ist somit auch möglich, ein Lademanagement an einem Ladepunkt für mehrere Elektrofahrzeuge bereitzustellen. Beispielsweise können zwei oder mehr Ladestecker über jeweils ein Spannungsversorgungskabel an der Spannungsversorgungsstation angeschlossen sein. Die einzelnen Ladestecker können bevorzugt untereinander kommunizieren und eine für jedes Elektrofahrzeug optimale/benötigte Ladeleistung einregeln.

Die zuvor genannten Ausführungen insbesondere zum drahtlos Kommunikationsmodul, in diesem Text auch nur Kommunikationsmodul genannt, können auch separat betrachtet werden, ohne den Offenbarungsgehalt zu verlassen. Dies bedeutet, dass das drahtlos Kommunikationsmodul sowie die damit verbundenen und beschriebenen Eigenschaften und Merkmale auch losgelöst von dem Spannungskonverter eingesetzt werden können.

Der Spannungskonverter kann auch Bi-direktional betrieben werden. Dies bedeutet, die Batteriespannung der Traktionsbatterie kann genutzt werden, um das Netz zu stabilisieren.

Die vorliegende Erfindung betrifft weiterhin ein Verfahren zum Betreiben der Ladeanordnung mit den mindestens zum Patentanspruch 1 eingangs beschriebenen Merkmalen. Das Verfahren zeichnet sich dadurch aus, dass eine hohe Versorgungsspannung in eine relativ dazu geringere Ladespannung in einem Spannungskonverter in dem Ladestecker konvertiert wird. Somit wird eine höhere Ladeleistung bei gleichem oder verringertem Querschnitt des Spannungsversorgungskabels bereitgestellt. Gleichzeitig können bereits am Markt befindliche Elektrofahrzeuge mit ihrem jeweiligen Lademanagement ohne weitere Modifikation mit der erfindungsgemäßen Ladeanordnung betrieben bzw. aufgeladen werden.

Hierzu wird der Ladestecker in das Elektrofahrzeug gesteckt. Das Elektrofahrzeug erkennt den Steckvorgang und tauscht mittels PWM-Kommunikation Informationen mit dem Ladestecker aus. Beispielsweise wird auch der maximale Ladestrom, der von dem Elektrofahrzeug aufgenommen werden kann, an den Ladestecker, insbesondere das Kommunikationsmodul in dem Ladestecker, weitergegeben. Über die PLC-Kommunikation wird dann der Ladevorgang gestartet. Das Elektrofahrzeug gibt die Ladespannung bzw. den Ladestrom vor. Im Ladestecker wird dem Spannungskonverter ein Soll-Wert vorgegeben. Der Soll-Wert wird mit dem Ist-Wert verglichen und über den Spannungskonverter wird die nötige Ladespannung eingeregelt. Ebenfalls wird jedoch die höhere Versorgungsspannung auf die relativ dazu geringere Ladespannung konvertiert. Der gesamte Ladevorgang kann somit durch das Elektrofahrzeug sowie die Ladeelektronik des Elektrofahrzeuges selber, das Kommunikationsmodul und den Spannungskonverter durchgeführt werden. Die Spannungsversorgungsstation dient nur der Bereitstellung der Versorgungsspannung.

Das Kommunikationsmodul kann somit zum einen die Kommunikation mit dem Elektrofahrzeug vornehmen. Weiterhin kann das Kommunikationsmodul beispielsweise mit der Spannungsversorgungsstation oder mit einem Server kommunizieren. Gleichzeitig kann jedoch das Kommunikationsmodul auch Daten liefern, die in einer Anzeige am Ladestecker angezeigt werden.

Insbesondere kann das Kommunikationsmodul über eine drahtlose Verbindung mit einer externen Empfangsstelle kommunizieren und Daten zum Ladevorgang/Ladezustand austauschen.

Weitere Vorteile, Merkmale, Eigenschaften und Aspekte der vorliegenden Erfindung sind Gegenstand der nachfolgenden Beschreibung. Bevorzugte Ausgestaltungsvarianten werden in den schematischen Figuren dargestellt. Diese dienen dem einfachen Verständnis der Erfindung.

Es zeigen:
- Figur 1: eine aus dem Stand der Technik bekannte Ladeanordnung,
- Figur 2: eine erfindungsgemäße Ladeanordnung,
- Figur 3 a-f: verschiedene Querschnittsansichten durch ein Ladekabel gemäß dem Stand der Technik und durch erfindungsgemäße Spannungsversorgungskabel
- Figur 4: den Ladestecker aus Figur 2 mit zusätzlichem drahtlos Kommunikationsmodul und optionaler Anzeige und
- Figur 5: ein Blockschaltbild, welches einen erfindungsgemäßen Ladevorgang darstellt.

In den Figuren werden für gleiche oder ähnliche Bauteile dieselben Bezugszeichen verwendet, auch wenn eine wiederholte Beschreibung aus Vereinfachungsgründen entfällt.

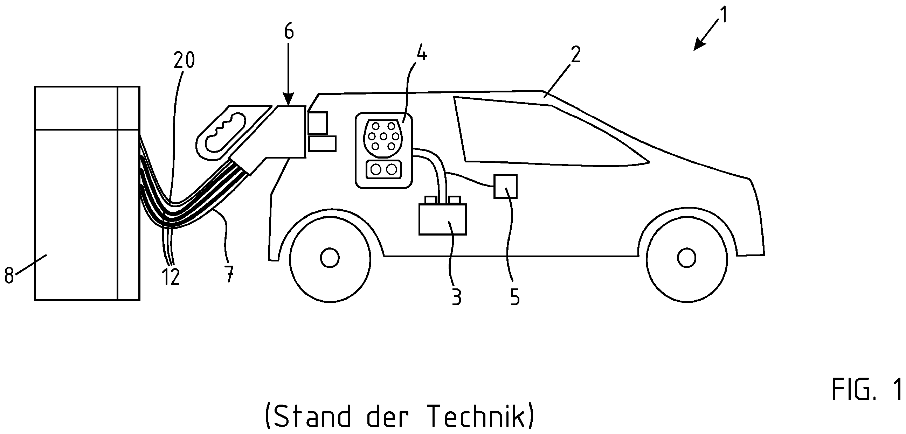

Figur 1 zeigt eine aus dem Stand der Technik bekannte Ladeanordnung 1 für ein Elektrofahrzeug 2. Das Elektrofahrzeug 2 verfügt dabei über eine Traktionsbatterie 3, auch Akkumulator oder Energiespeicher genannt, sowie eine Steckdose 4 zum Einstecken eines Ladesteckers 6. Ferner weist das Elektrofahrzeug 2 ein onboard Lademanagement 5 auf. Um einen Ladevorgang auszuführen, wird ein Ladestecker 6 in die Steckdose 4 des Elektrofahrzeugs 2 gesteckt. Der Ladestecker 6 ist über ein Ladekabel 7 mit einer Ladesäule 8 verbunden. In dem Ladekabel 7 sind sowohl elektrische Leiter 12 zum Leiten von Ladestrom als auch Kommunikationsleitungen 20 für die Kommunikation von Lademanagement 5 des Elektrofahrzeuges 2 mit der Ladesäule 8 vorhanden.

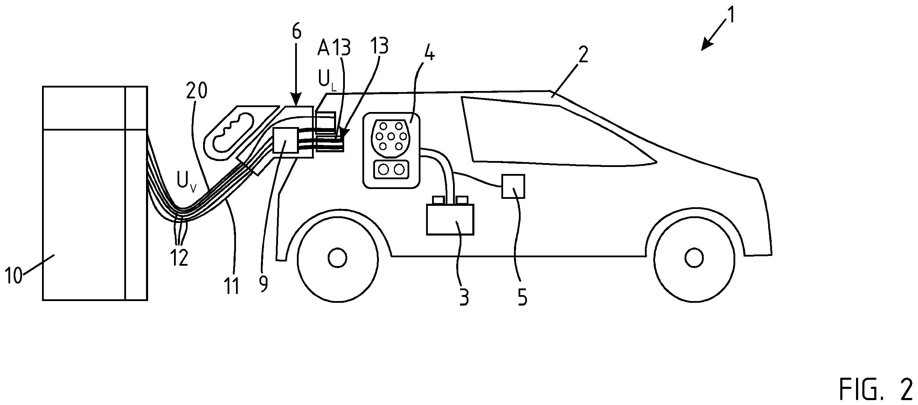

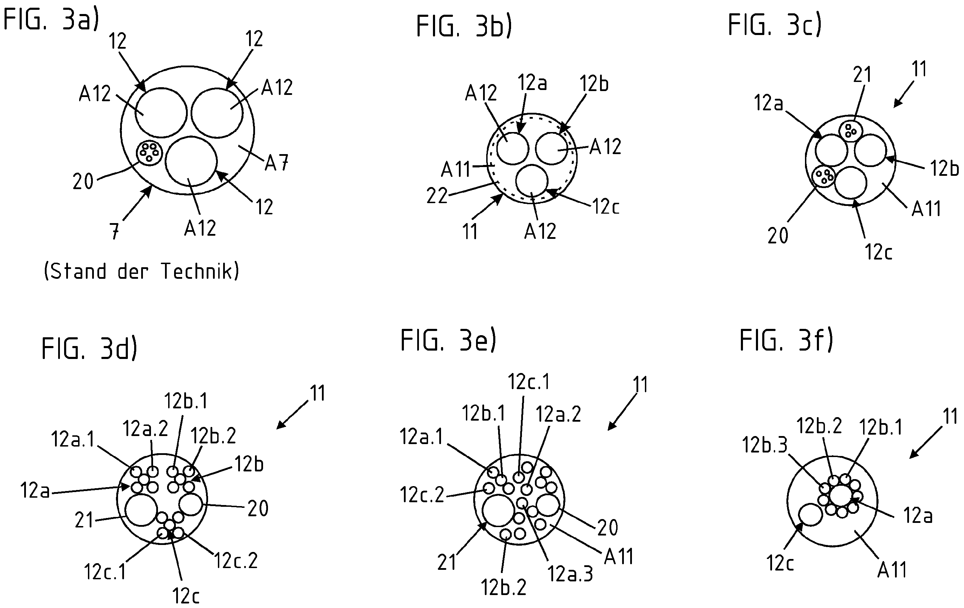

Figur 2 zeigt nunmehr eine erfindungsgemäße Ladeanordnung 1. Zur Durchführung des Ladevorganges ist der Ladestecker 6 in die Steckdose 4 des Elektrofahrzeugs 2 eingesteckt (der Einfachheit halber nicht dargestellt). Auch hier ist ein Ladestecker 6 vorhanden. Erfindungsgemäß ist jedoch in dem Ladestecker 6 selbst ein Spannungskonverter 9 angeordnet. Die Ladesäule kann somit als reine Spannungsversorgungsstation 10 bezeichnet werden, welche eine Versorgungsspannung U_{V} bereitstellt. Diese Versorgungsspannung U_{V} wird über ein Spannungsversorgungskabel 11 an den Ladestecker 6 weitergegeben, so dass an dem Ladestecker 6 die Versorgungsspannung U_{V} auf die Bildebene bezogen auf der linken Seite am Ladestecker 6 anliegt bzw. am Spannungskonverter 9 anliegt. Nunmehr ist erfindungsgemäß vorgesehen, dass in dem Ladestecker 6 der Spannungskonverter 9 die Versorgungsspannung U_{V} auf eine Ladespannung U_{L} konvertiert, wobei die Ladespannung U_{L} relativ bezogen zu der Versorgungsspannung U_{V} kleiner ist. Somit ist es möglich, dass ein Kabelquerschnitt des Spannungsversorgungskabels 11 und ein Leitungsquerschnitt A12 der elektrischen Leiter 12 (siehe dazu auch Figur 3) innerhalb des Spannungsversorgungskabels 11 kleiner ist als ein Leitungsquerschnitt A13 der elektrischen Steckkontakte 13 sowie gegebenenfalls nicht näher dargestellter elektrischer Leiter von Spannungskonverter 9 zu elektrischen Steckkontakten 13 in dem Ladestecker 6. Hierdurch sinkt das damit einhergehende Gewicht des Spannungsversorgungskabels 11, bei gleichzeitig einfacherem Handling und der Möglichkeit, eine höhere Ladeleistung über das Spannungsversorgungskabel 11 zu übertragen.

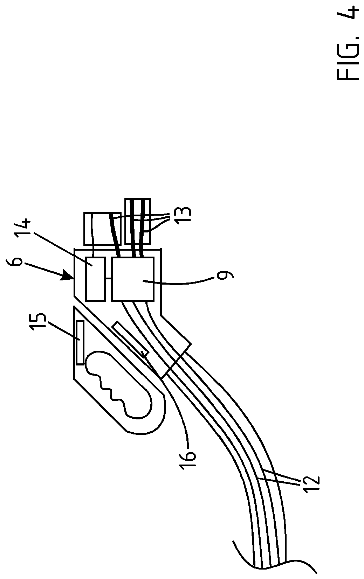

In Figur 2 ist noch eine Kommunikationsleitung 20 in dem Spannungsversorgungskabel 11 dargestellt, als eine Option der Erfindung. Die Kommunikationsleitung kann jedoch erfindungsgemäß entfallen, dargestellt in Fig. 3 und 4.

Figur 3 a zeigt eine Querschnittsansicht durch ein Ladekabel 7 gemäß dem Stand der Technik. Figur 3 b bis 3 f zeigen verschiedene Querschnittsansichten durch ein jeweiliges erfindungsgemäßes Spannungsversorgungskabel 11. Zu erkennen ist, dass die Querschnittsfläche A12 der elektrischen Leiter 12 innerhalb des Spannungsversorgungskabels 11 kleiner ist als die Querschnittsfläche A12 der elektrischen Leiter 12 innerhalb des Ladekabels 7. Auch die Querschnittsfläche A11 des in den Figuren 3 b bis 3 f jeweils dargestellten Spannungsversorgungskabels 11 ist kleiner als die Querschnittsfläche A7 des linken Ladekabels 7. Ebenfalls kann erfindungsgemäß die Kommunikationsleitung 20 entfallen.

In Figur 3 b ist optional eine Schirmung 22 dargestellt. Die Schirmung 22 ist beispielsweise eine Ummantelung oder Isolierung, welche insbesondere selbst aus einem elektrisch leitfähigen Werkstoff ausgebildet sein kann.

Figur 3 c zeigt weiterhin eine Ausführungsvariante eines erfindungsgemäßen Spannungsversorgungskabels 11. Dieses weist wiederum die drei elektrischen Leiter 12 auf. Diese sind beispielsweise dargestellt als 12a Plusleiter, 12b Minusleiter und 12c PE-Schutzleiter.

Ferner kann optional eine Hilfsspannungsleitung 21 vorgesehen sein, über welche beispielsweise eine Hilfsspannung bereitgestellt werden kann. Diese Hilfsspannung kann beispielsweise genutzt werden, um den Spannungskonverter 9 selbst mit einer Betriebsspannung zu versorgen.

Weiterhin kann optional ergänzend oder alternativ auch eine Kommunikationsleitung 20 vorgesehen sein. Die elektrischen Leiter 12 a bis 12 c sind insgesamt einteilig ausgebildet. Dies bedeutet, sie können aus mehreren Adern, die jedoch zu einem Strang zusammengefasst sind ausgebildet sein.

Im Unterschied dazu ist ein jeweiliger elektrischer Leiter 12 gemäß der Ausführungsvariante in Figur 3 d selbst aus mehreren einzelnen Leitungssträngen ausgebildet. Der Leiter 12a ist beispielsweise durch die Leitungsstränge 12a.1, 12a.2 usw. ausgebildet. Gleiches gilt für den Leiter 12b. Dieser ist ausgebildet durch die Leitungsstränge 12b.1, 12b.2 usw. Gleiches gilt wiederum für den Leiter 12c, dieser ist ausgebildet aus den Leitungssträngen 12c.1, 12c.2 usw. Eine weitere Nummerierung entfällt aus Vereinfachungsgründen.

Bevorzugt ist jeder Leiter 12 aus mindestens zwei Leitungssträngen 12a.1, 12a.2 usw. ausgebildet, insbesondere aus sechs oder mehr Leitungssträngen. Die Leitungsstränge eines jeden elektrischen Leiters 12 sind jedoch im Querschnitt örtlich zusammengefasst bzw. nah beieinander angeordnet.

Eine Alternative dazu ist in Figur 3 e gezeigt, hier sind die Leitungsstränge 12a.1 unter der einzelnen elektrischen Leiter 12 unregelmäßig verteilt im Querschnitt des Spannungsversorgungskabels 11 angeordnet. Jeweils optional können auch eine Hilfsspannungsleitung 22 sowie eine Kommunikationsleitung 20 angeordnet sein. Einzelne Leitungsansichten sind aus Vereinfachungsgründen nicht dargestellt.

In Figur 3 f ist eine weitere Ausführungsvariante des erfindungsgemäßen Spannungsversorgungskabels 11 im Querschnitt dargestellt. Hier sind wiederum drei Leiter 12a, 12b und 12c dargestellt. Die Kommunikationsleitung und die Hilfsspannungsleitung sind nicht dargestellt, können jedoch auch entfallen. Der elektrische Leiter 12b selbst ist ausgebildet durch einzelnen Leitungsstränge 12b.1, 12b.2, 12b.3 usw. Diese sind coaxial um den Leiter 12a angeordnet. Der Leiter 12a und der Leiter 12c sind jeweils einteilig ausgebildet, also nicht in einzelne separate Leitungsstränge unterteilt. Dies ist jedoch nicht abschließend. Auch kann ein zweiter Leiter in Leitungssträngen unterteilt ausgebebildet sein, alternativ kann auch nur der Leiter 12c oder nur der Leiter 12a in Einzelleitungsstränge aufgeteilt sein.

Figur 4 zeigt den Ladestecker 6 gemäß Figur 2 in modifizierter Ausgestaltungsvariante. Hier ist neben dem Spannungskonverter 9 noch ein drahtlos Kommunikationsmodul 14 sowie optional eine Anzeige 15 mit in den Ladestecker 6 integriert. Das drahtlos Kommunikationsmodul 14 kann dabei mit dem Spannungskonverter 9 kommunizieren. Gleichzeitig kann das drahtlos Kommunikationsmodul 14 auch die Hard- und Software zur Regelung des Spannungskonverters 9 beinhalten. Ferner dargestellt in Figur 4 ist eine zusätzliche Energiequelle 16, beispielsweise ein Akkumulator. Dieser kann sowohl den Spannungskonverter 9 als auch das drahtlos Kommunikationsmodul 14 sowie die Anzeige 15 mit Energie versorgen. Die Energiequelle 16 kann beispielsweise an der Spannungsversorgungsstation 10 aufgeladen werden, wenn der Ladestecker 6 nicht in Betrieb ist. Anschlussleitungen der Energiequelle 16 sind nicht dargestellt.

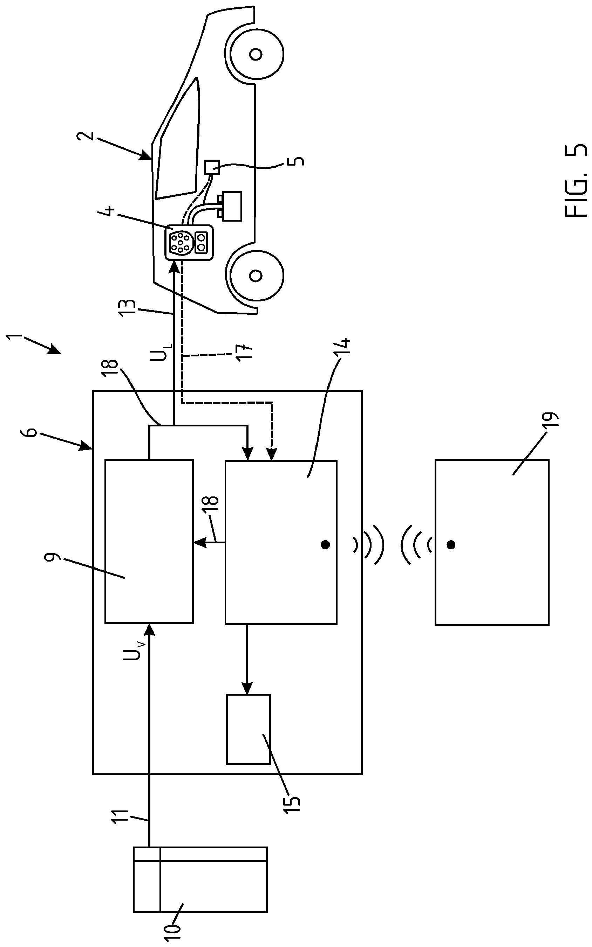

Figur 5 zeigt weiterhin ein Blockschaltbild bei Durchführung eines erfindungsgemäßen Ladevorganges mit der Ladeanordnung 1. In dem Ladestecker 6 ist der erfindungsgemäße Spannungskonverter 9 angeordnet. Beim Einstecken des Ladesteckers 6 in die Steckdose 4 des Elektrofahrzeuges 2 beginnt die Kommunikation mit dem Elektrofahrzeug 2. Hierzu ist innerhalb des Ladesteckers 6 das drahtlos Kommunikationsmodul 14 angeordnet. Dieses kann sowohl Daten 17 des Elektrofahrzeuges 2 auslesen als auch eine Regelung 18 des Spannungskonverters 9 vornehmen. Insbesondere wird die Ladespannung U_{L} eingeregelt. Auch können Informationen auf der Anzeige 15 des Ladesteckers 6 wiedergeben werden. Ferner kann das drahtlos Kommunikationsmodul 14 mit einem externen Empfänger 19, insbesondere Server, kommunizieren. Dieser Empfänger 19 kann beispielsweise in der Spannungsversorgungsstation 10 angeordnet sein. Es kann jedoch beispielsweise auch über Drahtlosverbindungen, beispielsweise eine GSM-Verbindung, ein nicht in der näheren Umgebung ortsunabhängiger Server mit Informationen versorgt werden. Beispielsweise kann dies ein Server sein, zu dem der Nutzer des Elektrofahrzeuges 2 eine Verbindung mit einem mobilen Endgerät besitzt.

Es können dann Informationen auf das mobile Endgerät hinsichtlich Ladedauer, Strompreis und/oder Ladezustand sowie weitere relevante Daten weitergegeben werden.

### Bezugszeichen:

- 1 -: Ladeanordnung
- 2 -: Elektrofahrzeug
- 3 -: Traktionsbatterie
- 4 -: Steckdose
- 5 -: Lademanagement
- 6 -: Ladestecker
- 7 -: Ladekabel
- 8 -: Ladesäule
- 9 -: Spannungskonverter
- 10-: Spannungsversorgungsstation
- 11 -: Spannungsversorgungskabel
- 12 -: elektrischer Leiter
- 12a -: elektrischer Leiter
- 12b -: elektrischer Leiter
- 12c -: elektrischer Leiter
- 12a.1 -: Leitungsstrang
- 12a.2 -: Leitungsstrang
- 12b.1 -: Leitungsstrang
- 12b.2 -: Leitungsstrang
- 12c.1 -: Leitungsstrang
- 12c.2 -: Leitungsstrang
- 13 -: elektrischer Steckkontakt
- 14 -: drahtlos Kommunikationsmodul
- 15 -: Anzeige
- 16 -: Energiequelle
- 17 -: Daten zu 2
- 18 -: Regelung zu 9
- 19 -: Empfänger
- 20 -: Kommunikationsleitung
- 21: Hilfsspannungsleitung
- 22: Schirmung

- U_{V} -: Versorgungsspannung
- U_{L} -: Ladespannung
- A7 -: Querschnitt zu 7
- A11 -: Querschnitt zu 11
- A12 -: Querschnitt zu 12
- A13 -: Querschnitt zu 13

## Patentansprüche

1. Ladeanordnung (1) für ein Elektrofahrzeug (2) mit einer Traktionsbatterie (3), aufweisend eine Spannungsversorgungsstation (10), angeschlossen an ein Spannungsnetz und ein Spannungsversorgungskabel (11) mit Ladestecker (6), wobei zur Durchführung eines Ladevorganges der Ladestecker (6) mit dem Elektrofahrzeug (2) verbunden ist, **dadurch gekennzeichnet, dass** in dem Ladestecker (6) ein Spannungskonverter (9) zur Konvertierung einer von der Spannungsversorgungsstation (10) bereitgestellten DC Versorgungsspannung (U_{V}), in eine relativ dazu geringere DC Ladespannung (U_{L}), die am Elektrofahrzeug (2) anliegt, angeordnet ist, wobei die Versorgungsspannung (U_{V}) größer 900 V ist und dass die Ladespannung (U_{L}) kleiner als 0.9 mal der Versorgungsspannung (U_{V}) ist.

2. Ladeanordnung (1) nach Anspruch 1, **dadurch gekennzeichnet, dass** mindestens zwei, bevorzugt drei elektrische Leiter (12) in dem Spannungsversorgungskabel (11) angeordnet sind und optional mindestens eine Kommunikationsleitung (20) in dem Spannungsversorgungskabel (11) angeordnet ist.

3. Ladeanordnung (1) nach Anspruch 1 oder 2, **dadurch gekennzeichnet, dass** durch das Spannungsversorgungskabel (11) eine Versorgungsspannung (U_{V}) von mehr als 1.000 V, bevorzugt mehr als 1.200 V und besonders bevorzugt mehr als 1.400 V übertragen wird.

4. Ladeanordnung (1) nach einem der Ansprüche 1 bis 3, **dadurch gekennzeichnet, dass** der stromleitende Querschnitt (A12) jedes elektrischen Leiters (12) in dem Spannungsversorgungskabel (11) kleiner 100 mm², insbesondere kleiner 80 mm², bevorzugt kleiner 70 mm² ist, insbesondere kleiner 55 mm² ist.

5. Ladeanordnung (1) nach einem der Ansprüche 1 bis 4, **dadurch gekennzeichnet, dass** die Ladefunktion über den Ladestecker (6) geregelt wird, wobei die Spannungsversorgungsstation (10) die Versorgungsspannung (U_{V}) zur Verfügung stellt.

6. Ladeanordnung (1) nach einem der Ansprüche 1 bis 5, **dadurch gekennzeichnet, dass** in dem Ladestecker (6) oder zwischen Ladestecker (6) und der Spannungsversorgungsstation (10) ein drahtlos Kommunikationsmodul (14) angeordnet ist.

7. Ladeanordnung (1) nach einem der Ansprüche 1 bis 6, **dadurch gekennzeichnet, dass** der Spannungskonverter (9) und/oder das Kommunikationsmodul (14) mit Energie aus dem Spannungsversorgungskabel (11) gespeist werden und/oder dass eine separate Energiequelle (16) hierfür vorgesehen ist.

8. Ladeanordnung (1) nach einem der Ansprüche 6 oder 7, **dadurch gekennzeichnet, dass** das Kommunikationsmodul (14) mit dem Lademanagement (5) des Elektrofahrzeuges (2), insbesondere kabelgebunden, kommuniziert und Daten an die Spannungsversorgungsstation (10) und/oder einen Server (19) sendet und/oder von diesem empfängt und/oder dass das Kommunikationsmodul (14) den Ladevorgang regelt.

9. Ladeanordnung nach einem der Ansprüche 1 bis 8, **dadurch gekennzeichnet, dass** der Ladestecker (6) eine Anzeige (15), insbesondere ein Display, aufweist, auf der Informationen über den Ladevorgang, den verbrauchten Ladestrom und/oder den Ladezustand der Traktionsbatterie (3) dargestellt sind.

10. Ladeanordnung nach einem der Ansprüche 6 bis 9, **dadurch gekennzeichnet, dass** das Kommunikationsmodul (14) die Temperatur des Ladesteckers (6), insbesondere der Steckkontakte (13) des Ladesteckers (6) überwacht.

11. Ladeanordnung nach einem der Ansprüche 1 bis 10, **dadurch gekennzeichnet, dass** mehrere Spannungsversorgungskabel (11) an eine Spannungsversorgungsstation (10) angeschlossen sind, um gleichzeitig mehrere Elektrofahrzeuge zu laden, wobei die Kommunikationsmodule (14) untereinander kommunizieren und eine jeweils verfügbare Versorgungsspannung (U_{V}) am Ladestecker (6) als Ladespannung einregeln.

12. Ladeanordnung (1) nach einem der Ansprüche 2 bis 11, **dadurch gekennzeichnet, dass** ein elektrischer Leiter (12) durch mindestens zwei Leitungsstränge (12a.1, 12a.2), bevorzugt mehr als drei Leitungsstränge, insbesondere sechs oder mehr als sechs Leitungsstränge in dem Spannungsversorgungskabel (11) ausgebildet ist, besonders bevorzugt sind alle elektrischen Leiter (12) durch jeweils mindestens zwei Leitungsstränge (12a.1, 12a.2, 12b.1, 12b.2, 12c.1, 12c.2) ausgebildet sind.

13. Ladeanordnung (1) nach Anspruch 12, **dadurch gekennzeichnet, dass** die Leitungsstränge (12a.1, 12a.2, 12b.1, 12b.2, 12c.1, 12c.2) in dem Querschnitt des Spannungsversorgungskabels (11) regelmäßig oder unregelmäßig angeordnet sind.

14. Verfahren zum Betreiben einer Ladeanordnung mit den Merkmalen von mindestens Anspruch 1, **dadurch gekennzeichnet, dass** eine Versorgungsspannung (U_{V}) in eine relativ dazu geringere Ladespannung (U_{L}) in einem Spannungskonverter (9) in dem Ladestecker (6) konvertiert wird.

## Claims

1. Charging arrangement (1) for an electric vehicle (2) with a traction battery (3), having a power supply station (10), connected to a power network and a power supply cable (11) with a charging connector (6), wherein, in order to perform a charging process, the charging connector (6) is connected to the electric vehicle (2), **characterised in that** a voltage converter (9) is arranged in the charging connector (6) for converting a DC supply voltage (U_{V}) provided by the power supply station (10) into a DC charging voltage (U_{L}), which is lower relative to that present at the electric vehicle (2), wherein the supply voltage (U_{V}) is greater than 900 V and that the charging voltage (U_{L}) is less than 0.9 times the supply voltage (U_{V}).

2. Charging arrangement (1) according to claim1, **characterised in that** at least two, preferably three electrical conductors (12) are arranged in the power supply cable (11) and optionally at least one communication line (20) is arranged in the power supply cable (11).

3. Charging arrangement (1) according to claim 1 or 2, **characterised in that** a supply voltage (U_{V}) of more than 1,000 V, preferably more than 1,200 V and most preferably more than 1,400 V is transferred via the power supply cable (11).

4. Charging arrangement (1) according to any of claims 1 to 3, **characterised in that** the conductive cross-section (A12) of each of the electrical conductors (12) in the power supply cable (11) is less than 100 mm², in particular less than 80 mm², preferably less than 70 mm², in particular less than 55 mm².

5. Charging arrangement (1) according to any of claims 1 to 4, **characterised in that** the charging function is controlled by means of the charging connector (6), wherein the power supply station (10) provides the supply voltage (U_{V}).

6. Charging arrangement (1) according to any of claims 1 to 5, **characterised in that** a wireless communication module (14) is arranged in the charging connector (6) or between the charging connector (6) and the power supply station (10).

7. Charging arrangement (1) according to any of claims 1 to 6, **characterised in that** the voltage converter (9) and/or the communication module (14) is/are supplied with power by the power supply cable (11) and/or that a separate power source (16) is provided for this purpose.

8. Charging arrangement (1) according to any of claims 6 or 7, **characterised in that** the communication module (14) communicates with the charging management system (5) of the electric vehicle (2), in particular via a cable, and sends data to and/or receives data from the power supply station (10) and/or a server (19) and/or that the communication module (14) controls the charging process.

9. Charging arrangement according to any of claims 1 to 8, **characterised in that** the charging connector (6) has a screen (15), in particular a display, on which information relating to the charging process, the charging current used and/or the charge level of the traction battery (3) is displayed.

10. Charging arrangement according to any of claims 6 to 9, **characterised in that** the communication module (14) monitors the temperature of the charging connector (6), in particular the plug contacts (13) of the charging connector (6).

11. Charging arrangement according to any of claims 1 to 10, **characterised in that** a plurality of power supply cables (11) are connected to a power supply station (10), in order to simultaneously charge a plurality of electric vehicles, wherein the communication modules (14) communicate with each other and adjust an available supply voltage (Uᵥ) at the charging connector (6) as the charging voltage.

12. Charging arrangement (1) according to any of claims 2 to 11, **characterised in that** an electrical conductor (12) is formed by at least two wiring harnesses (12a.1, 12a.2), preferably by more than three wiring harnesses, in particular six or more than six wiring harnesses in the power supply cable (11), most preferably all electrical conductors (12) are formed by at least two wiring harnesses (12a.1, 12a.2, 12b.1, 12b.2, 12c.1, 12c.2) in each case.

13. Charging arrangement (1) according to claim 12, **characterised in that** the wiring harnesses (12a.1, 12a.2, 12b.1, 12b.2, 12c.1, 12c.2) are regularly or irregularly arranged in the cross-section of the power supply cable (11).

14. Method for operating a charging arrangement with the characteristics of at least claim 1, **characterised in that** a supply voltage (U_{V}) is converted into a relatively lower charging voltage (U_{L}) in a voltage converter (9) in the charging connector (6).

## Revendications

1. Dispositif de charge (1) pour un véhicule électrique (2) avec une batterie de traction (3), présentant une station d'alimentation en tension (10), raccordée à un réseau de tension et un câble d'alimentation en tension (11) avec une prise de charge (6), dans lequel la prise de charge (6) est reliée au véhicule électrique (2) pour effectuer un processus de charge, **caractérisé en ce qu'**un convertisseur de tension (9) est agencé dans la prise de charge (6) pour convertir une tension d'alimentation continue (U_{V}) mise à disposition par la station d'alimentation en tension (10) en une tension de charge continue (U_{L}) plus faible par rapport à celle-ci, qui se trouve contre le véhicule électrique (2), dans lequel la tension d'alimentation (U_{V}) est supérieure à 900 V, et **en ce que** la tension de charge (U_{L}) est inférieure à 0,9 fois la tension d'alimentation (U_{V}).

2. Dispositif de charge (1) selon la revendication 1, **caractérisé en ce qu'**au moins deux, de préférence trois conducteurs électriques (12) sont agencés de préférence dans le câble d'alimentation en tension (11) et facultativement au moins une ligne de communication (20) est agencée dans le câble d'alimentation en tension (11).

3. Dispositif de charge (1) selon la revendication 1 ou 2, **caractérisé en ce qu'**une tension d'alimentation (U_{V}) supérieure à 1000 V, de préférence supérieure à 1 200 V et le plus préférentiellement supérieure à 1 400 V est transmise par le câble d'alimentation en tension (11).

4. Dispositif de charge (1) selon l'une quelconque des revendications 1 à 3, **caractérisé en ce que** la section transversale conductrice de courant (A12) de chaque conducteur électrique (12) dans le câble d'alimentation en tension (11) est inférieure à 100 mm², en particulier inférieure à 80 mm², de préférence inférieure à 70 mm², en particulier inférieure à 55 mm².

5. Dispositif de charge (1) selon l'une quelconque des revendications 1 à 4, **caractérisé en ce que** la fonction de charge est réglée via la prise de charge (6), dans lequel la station d'alimentation en tension (10) fournit la tension d'alimentation (U_{V}).

6. Dispositif de charge (1) selon l'une quelconque des revendications 1 à 5, **caractérisé en ce qu'**un module de communication sans fil (14) est agencé dans la prise de charge (6) ou entre la prise de charge (6) et la station d'alimentation (10).

7. Dispositif de charge (1) selon l'une quelconque des revendications 1 à 6, **caractérisé en ce que** le convertisseur de tension (9) et/ou le module de communication (14) sont alimentés en énergie par le câble d'alimentation en tension (11) et/ou **en ce qu'**une source d'énergie séparée (16) est prévue à cet effet.

8. Dispositif de charge (1) selon l'une quelconque des revendications 6 ou 7, **caractérisé en ce que** le module de communication (14) communique avec la gestion de charge (5) du véhicule électrique (2), en particulier par câble, et envoie des données à la station d'alimentation en tension (10) et/ou à un serveur (19) et/ou reçoit des données de ces derniers et/ou **en ce que** le module de communication (14) règle le processus de charge.

9. Dispositif de charge selon l'une quelconque des revendications 1 à 8, **caractérisé en ce que** la prise de charge (6) présente un affichage (15), en particulier un écran, sur lequel sont affichées des informations sur le processus de charge, le courant de charge consommé et/ou l'état de charge de la batterie de traction (3).

10. Dispositif de charge selon l'une quelconque des revendications 6 à 9, **caractérisé en ce que** le module de communication (14) surveille la température de la prise de charge (6), en particulier des contacts de prise (13) de la prise de charge (6).

11. Dispositif de charge selon l'une quelconque des revendications 1 à 10, **caractérisé en ce que** plusieurs câbles d'alimentation en tension (11) sont raccordés à une station d'alimentation en tension (10) afin de charger simultanément plusieurs véhicules électriques, dans lequel les modules de communication (14) communiquent entre eux et régulent une tension d'alimentation (U_{V}) respectivement disponible au niveau de la prise de charge (6) comme tension de charge.

12. Dispositif de charge (1) selon l'une des revendications 2 à 11, **caractérisé en ce qu'**un conducteur électrique (12) est réalisé par au moins deux brins de conducteur (12a.1, 12a.2), de préférence plus de trois brins de conducteur, en particulier six ou plus de six brins de conducteur dans le câble d'alimentation en tension (11), le plus préférentiellement tous les conducteurs électriques (12) sont réalisés par au moins deux brins de conducteur (12a.1, 12a.2, 12b.1, 12b.2, 12c.1, 12c.2).

13. Dispositif de charge (1) selon la revendication 12, **caractérisé en ce que** les brins de conducteur (12a.1, 12a.2, 12b.1, 12b.2, 12c.1, 12c.2) sont agencés régulièrement ou irrégulièrement dans la section transversale du câble d'alimentation en tension (11).

14. Procédé pour faire fonctionner un dispositif de charge avec les caractéristiques d'au moins la revendication 1, **caractérisé en ce qu'**une tension d'alimentation (U_{V}) est convertie dans un convertisseur de tension (9) dans la prise de charge (6) en une tension de charge (U_{L}) plus faible par rapport à celle-ci.
